# EUROPEAN PATENT APPLICATION

(11) **EP 3 331 145 A1**
(43) Date of publication of application: **06.06.2018**
(21) Application number: 17201757.6
(22) Date of filing: 15.11.2017
(51) Int. Cl.: H02M 1/42, H05B 33/08, H02M 3/335, H02M 1/00

(54) **CONVERTER CIRCUIT AND METHOD FOR CONTROLLING THEREOF**

(30) Priority: 30.11.2016 GB 201620653
(71) Applicant: Tridonic GmbH & Co. KG, 6851 Dornbirn (AT)
(72) Inventor: Kelly, Jamie, Tyne & Wear, NE29 8AH (GB); Makwana, Deepak, Newcastle Upon Tyne, NE4 8UB (GB)
(74) Representative: Rupp, Christian

(57) **Abstract**

The present invention discloses a converter circuit for converting an input voltage into an output voltage, wherein the converter circuit comprises an actively switched boost converter stage, an actively switched DC-to-DC converter stage, and a switch configured to be switched by a controller; characterized in that the operation of both the actively switched boost converter stage and the actively switched DC-to-DC converter stage is controllable by switching the switch of the converter circuit. The present invention further discloses an operating device for lighting means with such a converter circuit, a lighting device with such an operating device and lighting means as well as a method for controlling such a converter circuit.

## Description

### 1. Field of the invention

The present invention relates to a converter circuit, an operating device for lighting means with such a converter circuit, as well as a lighting device with such an operating device and lighting means. In addition, the present invention relates to a method for controlling a converter circuit according to the present invention.

### 2. Technical background

In the prior art actively switched converter circuits for converting an input voltage to an output voltage in order to provide an operating voltage, operating current or operating power for lighting means, such as a LED, are well known.

Ensuring on one side a high power factor (PF) and total harmonic distortion (THD) for such a converter circuit and on the other side reducing the costs for such a converter circuit as well as reducing the complexity of controlling the switch of such an actively switched converter circuit constitutes a common problem in the state of the art.

Therefore, it is an object of the present invention to provide a converter circuit for converting an input voltage into an output voltage, which on one side has a high power factor and total harmonic distortion and on the other side reduces the costs and the complexity of controlling the converter circuit. In addition, it is an object of the present invention to provide an operating device for lighting means comprising such a converter circuit, to provide a lighting device with such an operating device and lighting means as well as to provide a method for controlling such a converter circuit.

These and other objects, which become apparent upon reading the following description, are solved by the subject-matter of the independent claims. The dependent claims refer to preferred embodiments of the invention.

### 3. Summary of the invention

According to an aspect of the invention a converter circuit for converting an input voltage into an output voltage is provided, wherein the converter circuit comprises an actively switched boost converter stage, an actively switched DC-to-DC converter stage, and a switch configured to be switched by a controller; characterized in that the operation of both the actively switched boost converter stage and the actively switched DC-to-DC converter stage is controllable by switching the switch of the converter circuit.

With other words, the present invention provides a converter circuit with an actively switched boost converter stage, an actively switched DC-to-DC converter stage and one switch, wherein the voltage conversion by the actively switched boost converter stage and the voltage conversion by the actively switched DC-to-DC converter stage is controllable by switching the one switch.

Thus, the control of two converter stages is achieved by only one switch used for actively switching the two converter stages and, thus, for controlling the voltage conversion by each of the two converter stages. As a result, the number of electronic components can be reduced, saving costs, and the complexity of control for the converter circuit is reduced.

The converter circuit is a circuit that is configured to convert an input voltage respectively input power into a higher or lower output voltage respectively output power by preferably cyclically switching the switch of the converter circuit.

An "*actively switched boost converter stage*" according to the present invention is a boost converter circuit respectively step-up converter circuit that is configured to convert an DC input voltage or rectified AC input voltage into a higher DC output voltage via preferably cyclically charging and discharging an electrical energy storage element, such as an inductor. The preferably cyclically charging and discharging of the electrical energy storage element is actively controlled by preferably cyclically switching a switch receiving a control signal from a control unit.

In the following the terms "*actively switched boost converter stage*" and "*boost converter*" are used as synonyms.

An "*actively switched DC-to-DC converter stage*" according to the present invention is a DC-to-DC converter circuit that is configured to convert an DC input voltage or rectified AC input voltage into a lower or higher DC output voltage via preferably cyclically charging and discharging an electrical energy storage element, such as an inductor. The preferably cyclically charging and discharging of the electrical energy storage element is controlled by preferably cyclically switching a switch. The boost convert circuit is one specific type of DC-to-DC converter circuit.

In the following the terms "*actively switched DC-to-DC converter stage*" and "*DC-to-DC converter stage*" are used as synonyms.

Preferably, the input voltage is a DC voltage, such as the voltage supplied by a battery, or a rectified AC voltage, such as a rectified mains voltage.

Preferably, the switch is a transistor, more preferably a MOSFET or a bipolar transistor.

Preferably, the boost converter stage comprises the switch; wherein the operation of both the boost converter stage and the DC-to-DC converter stage is controllable by switching the switch of the boost converter stage.

That is, preferably, the switching of the DC-to-DC converter stage is slaved to the switching of the boost converter stage. This has the benefit that only a single controller for controlling the boost converter stage, in particular the switch of the boost converter stage, is required in order to control both the boost converter stage and the DC-to-DC converter stage.

Alternatively, the DC-to-DC converter stage preferably comprises the switch; wherein the operation of both the boost converter stage and the DC-to-DC converter stage is controllable by switching the switch of the DC-to-DC converter stage.

That is, preferably, the switching of the boost converter stage is slaved to the switching of the DC-to-DC converter stage. This has the benefit that only a single controller for controlling the DC-to-DC converter stage, in particular the switch of the DC-to-DC converter stage, is required in order to control both the boost converter stage and the DC-to-DC converter stage.

Preferably, the boost converter stage comprises a first electrical energy storage element and the DC-to-DC converter stage comprises a second electrical energy storage element; wherein the charging and discharging of the first and second electrical energy storage element is controllable by switching the switch of the converter circuit.

Preferably, the first electrical energy storage element and the second electrical energy storage element are an inductor.

In case, the DC-to-DC converter stage is a DC-to-DC converter circuit with a transformer for galvanic isolation between the input and output, such as a flyback converter circuit, the second electrical energy storage element is preferably the primary winding of the transformer used for the galvanic isolation.

Preferably, the DC-to-DC converter stage is a flyback converter stage or a buck converter stage.

That is, preferably, the DC-to-DC converter stage is a flyback converter circuit with a transformer for galvanic isolation between the input and output or a buck converter circuit.

Preferably, in case the DC-to-DC converter stage is a flyback converter stage and comprises the switch, the flyback converter stage is a primary side control flyback converter circuit, i.e. the switch is arranged on the primary side of the flyback converter stage with respect to the galvanic isolation.

Preferably, the input of the DC-to-DC converter stage is electrically connected in series to the output of the boost converter stage.

In other words, the boost converter stage and the DC-to-DC converter stage are preferably cascaded, such that the boost converter stage is followed by the DC-to-DC converter stage.

The boost converter stage and the DC-to-DC converter stage preferably form the voltage conversion stage respectively power conversion stage of the converter circuit, such that the boost converter stage is followed by the DC-to-DC converter stage in the voltage conversion stage respectively power conversion stage.

Preferably, the boost converter stage and the DC-to-DC converter stage are electrically connected to each other via a third electrical energy storage element.

The third electrical energy storage element is preferably a capacitor. This has the benefit that the boost converter stage and the DC-to-DC converter stage may be coupled to each other in a cost effective way.

Alternatively, the boost converter stage and the DC-to-DC converter stage are preferably electrically connected to each other via a passive power factor correction circuit, preferably via a valley fill circuit.

A passive power factor correction circuit, such as a valley fill circuit, for coupling the boost converter stage and the DC-to-DC converter stage with each other has the benefit, that the power factor (PF) and the total harmonic distortion (THD) of the converter circuit is improved.

Preferably, the switching of the switch is controllable such that both the boost converter stage and the DC-to-DC converter stage are respectively operated in the discontinuous conduction mode.

The discontinuous conduction mode (DCM) is a mode for operating an actively switched DC-to-DC converter circuit. During the discontinuous conduction mode the cyclically charging and discharging of the electrical energy storage element of the DC-to-DC converter circuit is controlled by cyclically switching the switch such that during a control cycle the following steps occur: Firstly, the electrical energy storage element is charged until the current of the electrical energy storage element reaches a predetermined maximum current value. Next, the electrical energy storage element is completely discharged, i.e. until the current of the electrical energy storage element reaches zero amperes (oA). After a predetermined time period the electrical energy storage element is controlled to be charged again, which starts the next control cycle.

That is, during the discontinuous conduction mode the electrical energy storage element is cyclically charged and discharged such that the current flowing through the electrical energy storage element rises to a predetermined maximum current value during the charging of a control cycle, the current then falls to zero amperes during the discharging of the same control cycle and the electrical energy storage element is then kept discharged for a predetermined time period during the same control cycle before being charged again in the next control cycle.

In case the electrical energy storage element is controlled to be charged again immediately after the current of the electrical energy storage element has reached zero amperes, the operation mode is called borderline conduction mode (BCM). In case the electrical energy storage element is controlled to cyclically charge and discharge between a predetermined maximum current value and a predetermine non-zero minimum current value, the operation mode is called continuous conduction mode (CCM).

The benefit of operating the boost converter stage and the DC-to-DC converter stage in the discontinuous conduction mode is that a higher power factor of the converter circuit may be achieved in comparison to another type of operation mode.

Preferably, the boost converter stage and the DC-to-DC converter stage are configured to operate in the discontinuous conduction mode such that the boost converter stage assumes the non-conducting phase, while the DC-to-DC converter stage is still in the conducting phase.

That is, preferably, for operating the boost converter stage and the DC-to-DC converter stage in the discontinuous conduction mode the switch is controllable such that in a switching cycle the boost converter stage reaches the non-conducting phase before the DC-to-DC converter stage reaches the non-conducting phase. Thus, the boost converter stage and the DC-to-DC converter stage are preferably controllable such that they operate in the discontinuous conduction mode and the current flowing through the electrical energy storage element of the boost converter stage reaches zero amperes before the current flowing through the electrical energy storage element of the DC-to-DC converter stage reaches zero amperes in the same switching cycle of the discontinuous conduction mode.

In the present invention, the terms "*control cycle*" and "*switching cycle*" are used as synonyms.

When operating a DC-to-DC converter circuit in the discontinuous conduction mode, the conducting phase of a switching cycle is the phase during which a current is flowing through the electrical energy storage element of the DC-to-DC converter circuit, starting with the charging of the electrical energy storage element and ending when the electrical energy storage element is discharged, i.e. the current flowing through the electrical energy storage element has fallen to zero amperes. The non-conducting phase of a switching cycle of the discontinuous conduction mode is the phase during which the electrical energy storage element is kept discharged before being charged again in the next switching cycle.

Preferably, the converter circuit comprises a first current sensing element, and a second current sensing element; wherein the first current sensing element and the second current sensing element are configured to sense the current of the boost converter stage, in particular of the first electrical energy storage element, and the current of the DC-to-DC converter stage, in particular of the second electrical energy storage element, with respect to the low potential of the converter circuit, preferably with respect to ground potential, when the switch is in the conducting state.

That is, the converter circuit comprises a first current sensing element and a second current sensing element that are arranged in the converter circuit such that they are configured to sense with respect to the low potential of the converter circuit, preferably with respect to ground potential, the current flowing through the boost converter stage, in particular through the first electrical energy storage element of the boost converter stage, and the current flowing through the DC-to-DC converter stage, in particular through the second electrical energy storage element of the DC-to-DC converter stage, when the switch is in the conducting stage.

Sensing current with respect to the low potential of the converter circuit, preferably with respect to ground potential, has a benefit over sensing current with respect to a variable potential, as the external circuitry for evaluating the sensing result is
The passage "*the low potential input terminal of the converter circuit* is *electrically connected to the first node*" means that the low potential input terminal corresponds to the first node, i.e. the low potential input terminal of the converter circuit and the
According to the present invention an operating device for operating lighting means is also provided, wherein the operating device comprises input terminals for supplying an input voltage to the operating device, output terminals for electrically connecting the lighting means to the operating device, and a converter circuit according to the present invention, as outlined above; wherein the converter circuit is configured to convert the input voltage supplied to the operating device to an operating voltage for operating the lighting means and to supply the operating voltage to the output terminals of the operating device.

In other words, the operating device is configured to operate lighting means, in that the converter circuit of the operating device is configured to convert an input voltage into an output voltage. As a result thereof, the operating device is able to provide at its output terminals an operating voltage, operating current or operating power for the operation of the lighting means.

Preferably, the operating device is a low power LED operating device respectively low power LED driver, such as e.g. an emergency operating driver or maintained mode driver for LEDs.

Preferably, the operating device comprises a controller, wherein the controller is configured to control the switching of the switch of the converter circuit.

That is, preferably, the controller of the operating device is configured to preferably cyclically switch the switch of the converter circuit in order to control the operation of the boost converter stage and the DC-to-DC converter stage.

Preferably, the controller is a microcontroller, an application-specific integrated circuit (ASIC) or a hybrid thereof.

Preferably, the controller is configured to control the switching of the switch such that both the boost converter stage and the DC-to-DC converter stage are respectively operated in the discontinuous conduction mode.

Preferably, the controller is configured to operate the boost converter stage and the DC-to-DC converter stage in the discontinuous conduction mode such that the boost converter stage assumes the non-conducting phase, while the DC-to-DC converter stage is still in the conducting phase.

That is, preferably, the controller is configured to control the preferably cyclically switching of the switch, such that the boost converter stage and the DC-to-DC converter stage of the converter circuit are both operated in the discontinuous operation mode and the boost converter stage reaches the non-conducting phase before the DC-to-DC converter stage reaches the non-conducting phase in the same control cycle respectively switching cycle.

According to the present invention a lighting device may also be provided, wherein the lighting device comprises an operating device according to the present invention, as outlined above, and lighting means electrically connected to the output terminals of the operating device; wherein the operating device is configured to supply the lighting means with electrical energy.

That is, the operating device is configured to operate the lighting means by providing an operating voltage, operating current and/or operating power.

Preferably, the lighting means comprises at least one light source, such as a LED, a luminescent lamp or any other light source configured to transmit light.

More preferably, the lighting means comprises at least one LED. In case the lighting means comprises more than one LED, the LEDs of the lighting means are preferably electrical connected to each other in series and/or parallel.

The term "*LED*" is to be understood as comprising any type of light-emitting diode, such as organic LED, non-organic LED, low power LED, high power LED, etc.

According to a preferred embodiment, the operating device of the lighting device is a low power LED operating device respectively low power LED driver, such as e.g. an emergency operating driver or maintained mode driver for LEDs, and, preferably, the lighting means of the lighting device comprises at least one low power LED, such as e.g. an emergency LED for providing an emergency lighting.

According to the present invention also a method for controlling a converter circuit according to the present invention, as outlined above, is provided; wherein the method is characterized in that the operation of both the actively switched boost converter stage and the actively switched DC-to-DC converter stage is controlled by switching the switch of the converter circuit.

Preferably, the boost converter stage comprises a first electrical energy storage element and the DC-to-DC converter stage comprises a second electrical energy storage element; wherein according to the method of the present invention the charging and discharging of the first and second electrical energy storage element is preferably controlled by switching the switch.

Preferably, the switching of the switch is controlled such that both the boost converter stage and the DC-to-DC converter stage are respectively operated in the discontinuous conduction mode.

Preferably, the boost converter stage and the DC-to-DC converter stage are operated in the discontinuous conduction mode such that the boost converter stage assumes the non-conducting phase, while the DC-to-DC converter stage is still in the conducting phase.

The previous optional features may be combined in any way to form the method according to the present invention.

### 4. Description of preferred embodiments

In the following, preferred embodiments of the present invention are described exemplarily with reference to the enclosed figures, in which
- **Figure 1**: shows a conceptual block diagram of a preferred embodiment of the lighting device, the operating device and the converter circuit according to the present invention.
- **Figure 2**: shows a circuit diagram of a preferred embodiment of the lighting device, the operating device and the converter circuit according to the present invention.
- **Figure 3**: shows a circuit diagram of another preferred embodiment of the lighting device, the operating device and the converter circuit according to the present invention;
- **Figure 4**: shows an equivalent circuit diagram of the preferred embodiment of the converter circuit according to the present invention shown in Figure 3;
- **Figures 5a to 5e**: show equivalent circuit diagrams of the preferred embodiment of the converter circuit according to Figure 3 for different phases of a preferred embodiment of a discontinuous conduction mode control;
- **Figure 6**: shows electrical parameters of the preferred embodiment of the converter circuit according to Figure 3 for the different phases of the preferred embodiment of a discontinuous conduction mode control shown in Figures 5a to 5e;
- **Figure 7**: shows the conceptual block diagram of Figure 1, schematically indicating a preferred embodiment of sensing current according to the present invention;
- **Figure 8**: shows the circuit diagram of the preferred embodiment of the converter circuit according to the present invention shown in Figure 2 with a preferred embodiment of sensing current according to the present invention;
- **Figure 9**: shows the equivalent circuit diagram of the preferred embodiment of the converter circuit according to the present invention shown in Figure 2 with a preferred embodiment of sensing current according to the present invention.

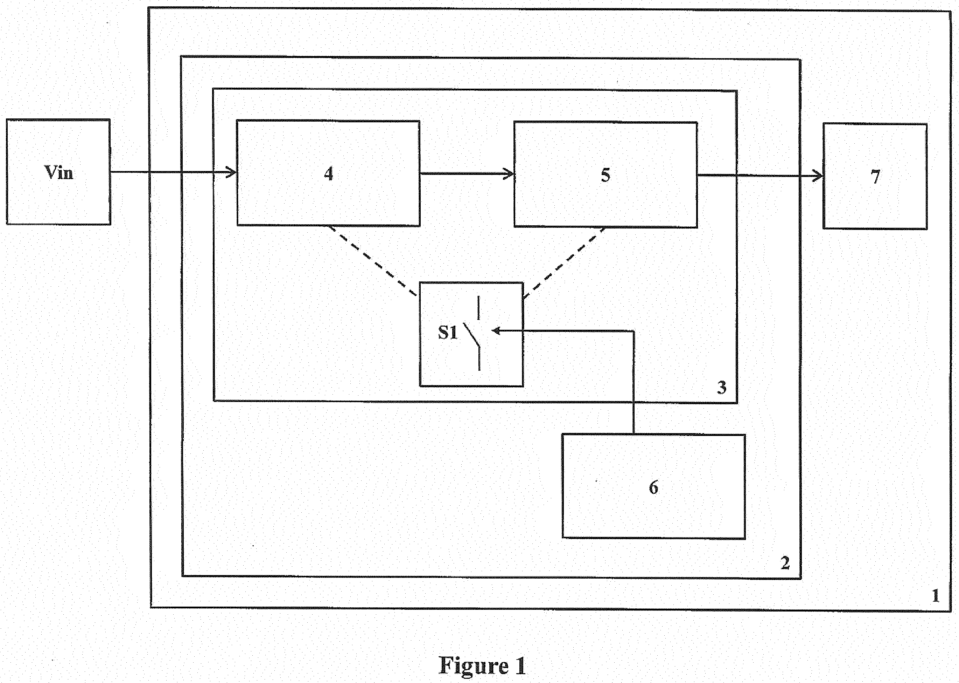

In the figures 1 to 9 corresponding features and electrical parameters are referenced by the same reference signs.

**Figure 1** shows a conceptual block diagram of a preferred embodiment of the lighting device, the operating device and the converter circuit according to the present invention.

According to Figure 1 the lighting device 1 comprises an operating device 2 and lighting means 7.

As outlined already above, the lighting means 7 preferably comprises at least one light source, such as a LED, a luminescent lamp or any other light source configured to transmit light.

More preferably, the lighting means comprises at least one LED. In case the lighting means comprises more than one LED, the LEDs of the lighting means are preferably electrical connected to each other in series and/or parallel.

The operating device 2 of Figure 1 comprises a converter circuit 3 and a controller 6.

The converter circuit 3 comprises an actively switched boost converter stage 4 (in the following referred to as "*boost converter stage*"), an actively switched DC-to-DC converter stage 5 (in the following referred to as "*DC-to-DC converter stage*") and a switch S1. As indicated by the dashed lines the operation of both the boost converter stage 4 and the DC-to-DC converter stage 5 is controlled by the one switch S1 of the converter circuit 3**.**

Each of the boost converter stage 4 and the DC-to-DC converter stage 5 is configured to convert an input voltage into an output voltage by preferably cyclically charging and discharging a respective electrical energy storage element, such as an inductor. Thereby, the charging and discharging of the respective electrical energy storage element and, thus, the voltage conversion is controlled by the switching of the switch S1.

As outlined already above, preferably, the DC-to-DC converter stage is a buck converter stage or a flyback converter stage.

As shown in Figure 1 the boost converter stage 4 and the DC-to-DC converter stage 5 form the voltage conversion line respectively power conversion line of the converter circuit 3, in which the boost converter stage 4 is arranged in front of the DC-to-DC converter stage 5. That is, the boost converter stage 4 and the DC-to-DC converter stage are cascaded to form the voltage conversion line respectively power conversion line of the converter circuit 3**.** Thus, the boost converter stage 4 and the DC-to-DC converter stage 5 are connected in series to each other. The arrows indicate the voltage path through the voltage conversion line formed by the boost converter stage 4 and the DC-to-DC converter stage 5 of the converter circuit 3**.**

The converter circuit 3 is configured to convert a DC input voltage Vin or an rectified AC input voltage Vin into an output voltage in order to provide an operating voltage, operating current or operating power for the lighting means 7.

The controller 6 of the operating device 2 is preferably a microcontroller, application-specific integrated circuit (ASIC) or a hybrid thereof, that is configured to control the switching of the switch S1 of the converter circuit 3**.** Preferably, the controller 6 is configured to control the switch such that the converter circuit 3, in particular the boost converter stage 4 and the DC-to-Dc converter stage 5, are operated in the discontinuous conduction mode. The arrow from the controller 6 to the switch S1 indicates in Figure 1 that the controller is configured to control the switch and, thus, is configured to control the operation of the converter circuit 3, in particular the operation of the boost converter stage 4 and the DC-to-DC converter stage 5.

In Figure 1 there is no indication that the controller receives any sensed or measured electrical parameters from the converter circuit 3 or the lighting means 7, for controlling the switch S1 in order to control the operating voltage, operating current or operating power supplied by the operating device 2 to the lighting means 7. Nevertheless, the boost converter stage 4, the DC-to-DC converter stage 5, the converter circuit 3, the operating device 2, the lighting means 7 and/or the lighting device 1 may be configured such that the controller 6 is able to perform a feed-back control of the switch S1 on the basis of one or more electric parameters from any of the elements mentioned before.

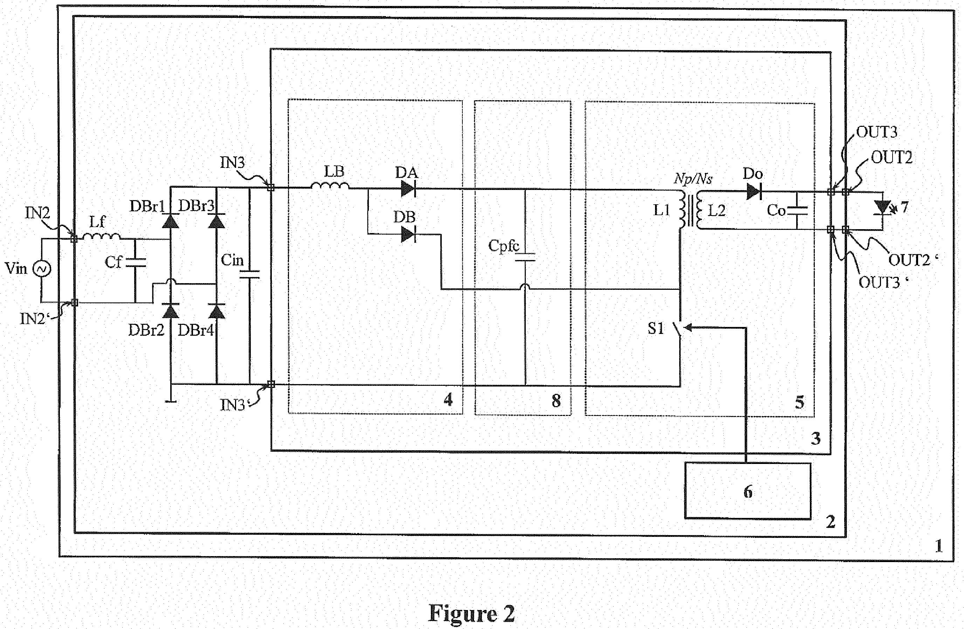

**Figure 2** shows a circuit diagram of a preferred embodiment of the lighting device, the operating device and the converter circuit according to the present invention.

The lighting device 1 comprises an operating device 2 and a lighting means 7 (represented in Figure 2 by the symbol for a LED), wherein the lighting means 7 are connected to the output terminals OUT2, OUT2' of the operating device 2**.**

The lighting means 7 are as described already above.

The operating device 2 comprises a high potential input terminal IN2 and a low potential input terminal IN2' for supplying an input voltage Vin, such as e.g. mains voltage, to the operating device 2**.**

Preferably, the operating device 2 comprises a filter circuit, formed by an inductor Lf and a capacitor Cf, and a rectifier circuit, formed by the four diodes DBr1, DBr2, DBr3 and DBr4, for filtering and rectifying the input voltage Vin supplied to the input terminals IN2, IN2' of the operating device 2**.** The filter circuit and rectifier circuit of the operating device 2 may also be differently implemented. Furthermore, the operating device may also not comprise a filter circuit and a rectifier circuit. In this case the input voltage Vin is preferably a DC voltage, such as the voltage of a battery, or a rectified AC voltage, such as a rectified mains voltage.

The operating device 2 also comprises a converter circuit 3 and a controller 6.

As shown in Figure 2, the input voltage Vin is stored in a capacitor Cin after having been filtered by the inductor Lf and capacitor Cf and having been rectified by the full-bridge rectifier circuit formed by the four diodes DBr1, DBr2, DBr3 and DBr4. Thus, in case the input voltage Vin is mains voltage, the capacitor Cin is an electrical energy storage element that provides to the converter circuit 3, in particular to the input terminals IN3, IN3' of the converter circuit 3, a filtered and rectified AC input voltage.

The converter circuit 3 according to Figure 2 comprises a boost converter stage 4 and a flyback converter stage 5, which are electrically connected respectively coupled via an electrical energy storage element 8, wherein the boost converter stage 4 is arranged in front of the flyback-converter stage 5.

The boost converter stage 4 comprises an electrical energy storage element in the form of an inductor LB and two diodes DA, DB. One side respectively one terminal of the inductor LB is electrically connected to the high potential input terminal IN3 of the converter circuit 3 and the other side respectively other terminal of the inductor LB is connected to the anode of the diode DA and to the anode of the diode DB.

In the present invention the terms "electrically connected", "*connected*", "*electrically coupled*" and "*coupled*" are used as synonyms. Furthermore, with respect to describing the connection of electrical elements in the present invention the terms "*a side*" of an electrical element and "*a terminal*" of an electrical element are used as synonyms. To describe in the present invention the two sides respectively terminals of an electrical element, to which another electrical element is connectable, the terms "*a side*/*terminal*" and "*another side*/*terminal*" of an electrical element and "a *first side*/*terminal*" and "*a second side*/*terminal*" of an electrical element are used as synonyms.

The cathode of the diode DA is connected to the transformer of the flyback converter stage 5, in particular to a first terminal of the first inductor respectively first winding L1 of the transformer. The cathode of the diode DA is also connected to the capacitor Cpfc forming the electrical energy storage element 8, which connects the boost converter stage 4 and the flyback converter 5 stage to each other. The cathode of the diode DB is connected to the second terminal of the primary inductor respectively primary winding L1 of the transformer of the flyback converter stage 5 and to a second terminal of the switch S1 of the converter circuit 3, in particular of the flyback converter stage 5. Thus, the cathode of the diode DA is connected to the node between the transformer, in particular the primary winding L1 of the transformer, and the switch S1.

The flyback converter stage 5 of the converter circuit 3 comprises a transformer that galvanically isolates a primary side of the flyback converter stage 5 from a secondary side of the flyback converter stage 5.

Thus, the converter circuit 3 also has a primary side galvanically isolated by the transformer of the flyback converter stage 5 from a secondary side of the converter circuit 3**.** On the primary side of the converter circuit 3 the boost converter stage 4, the electrical energy storage element 8 and the primary side of the flyback converter stage 5 are arranged. On the secondary side of the converter circuit 3 the secondary side of the flyback converter stage 5 is arranged.

On the primary side of the flyback converter stage 5 the primary inductor respectively primary winding L1 of the transformer and the switch S1 of the converter circuit 3 are arranged. The primary winding L1 of the transformer is connected in series to the switch S1. In particular, the first terminal of the primary winding L1 is connected to the cathode of the diode DA of the boost converter stage 4 and the second terminal of the primary winding L1 of the transformer is connected to the second terminal of the switch S1. The first terminal of the switch S1 is connected to the low potential input terminal IN3' of the converter circuit 3 and to the capacitor Cpfc that forms the electrical energy storage element 8.

On the secondary side of the flyback converter stage 2 the secondary inductor respectively secondary winding L2 of the transformer, a diode Do and a capacitor Co are arranged. The diode Do is arranged such that a flow of current from the output OUT3, OUT3' of the converter circuit 3 to the primary side of the flyback converter stage 5 is prevented. In particular, the anode of the diode Do is connected to the secondary winding L2 of the transformer and the cathode of the diode Do is connected to the capacitor Co. The capacitor Co is arranged in parallel to the secondary winding L2 of the transformer in order to store the voltage respectively the electrical power transferred via the transformer from the primary side to the secondary side of the flyback converter stage 5. The diode Do and the capacitor Co rectify the voltage provided by the secondary winding L2 of the transformer.

The diode Do and the capacitor Co may also be arranged outside the flyback converter stage, as long as they are connected to the secondary winding L2 of the transformer of the flyback converter stage 5 and rectify the voltage supplied by the secondary winding L2 of the transformer.

The primary winding L1 of the transformer forms the electrical energy storage element of the flyback converter stage 5. The switch S1 of the flyback converter stage 5 forms the switch of the converter circuit 3**.**

That is, Figure 2 shows a preferred embodiment of the converter circuit according to the present invention, in which the DC-to-DC converter stage of the converter circuit is a flyback converter stage and in which the DC-to-DC converter stage comprises the switch of the converter circuit for controlling the operation of both the boost converter stage and the DC-to-DC converter stage.

As outlined above, the switch may also be differently arranged, such that the boost converter stage comprises the switch, and the DC-to-DC converter stage may also be differently implemented. For example, the DC-to-DC converter stage may also be a buck converter stage.

As indicated in Figure 2 by the arrow between the controller 6 of the operating device 2 and the switch S1 of the converter circuit 3, the controller 6 is configured to control the switch S1 in order to control the operation of the boost converter stage 4 and the flyback converter stage 5. In particular, the controller 6 is configured to cyclically switch the switch S1 in order to cyclically charge and discharge the electrical energy storage element LB of the boost converter stage 4 and the electrical energy storage element L1 of the flyback converter stage 5. By cyclically charging and discharging the electrical energy storage element LB of the boost converter stage 4 and the electrical energy storage element L1 of the flyback converter stage 5 the input voltage respectively electrical power supplied to the converter circuit 3 is converted to an output voltage respectively electrical power. The value of the voltage respectively electrical power output by the converter circuit 3 depends on the switching of the switch S1.

Preferably, the controller 6 of the operation circuit 2 is on the same potential as the primary side of the converter circuit 3**.**

The switch S1 and the controller 6 may be implemented as already outlined above.

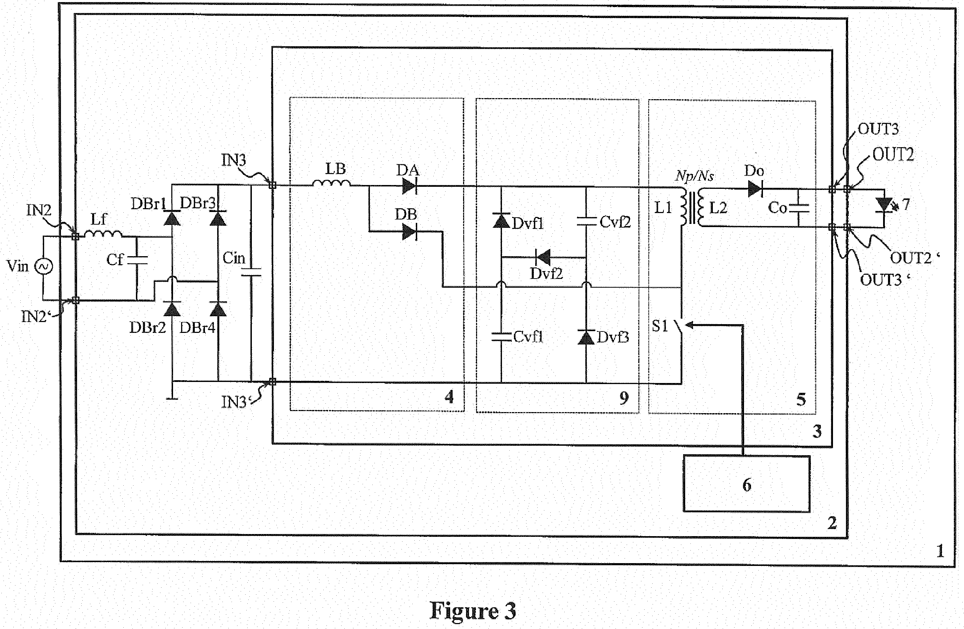

**Figure 3** shows a circuit diagram of another preferred embodiment of the lighting device, the operating device and the converter circuit according to the present invention. The preferred embodiment according to Figure 3 basically corresponds to the preferred embodiment according to Figure 2 and, thus, the above description of the preferred embodiment of Figure 2 is also valid for the preferred embodiment of Figure 3**.**

The two preferred embodiments differ in the way the boost converter stage 4 and the flyback converter stage 5 of the converter circuit 3 are connected to each other. According to the preferred embodiment of Figure 2 the boost converter stage 4 and the flyback converter stage 5 of the converter circuit 3 are connected to each other via a electrical energy storage element 8 formed by the capacitor Cpfc.

In contrast thereto, according to the preferred embodiment of Figure 3 the boost converter stage 4 and the flyback converter stage 5 of the converter circuit 3 are connected to each other by a passive power factor correction circuit 9. According to Figure 3 the passive power factor correction circuit is formed by a valley fill circuit comprising two capacitors Cvf1, Cvf2 and three diodes Dvf1, Dvf2, Dvf3. However, the passive power factor correction circuit may also be differently implemented.

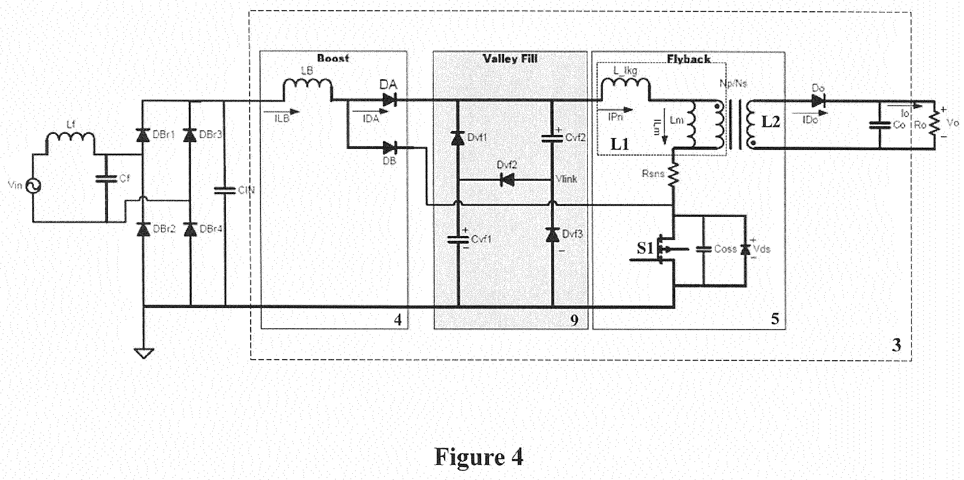

**Figure 4** shows an equivalent circuit diagram of the preferred embodiment of the converter circuit according to the present invention shown in Figure 3**.** The equivalent circuit diagram of Figure 4 basically corresponds to the circuit diagram of the converter circuit shown in Figure 3**.**

They differ in that the electrical energy storage element L1 of the flyback converter stage is represented in Figure 4 by inductors L_lkg and Lm connected in series, wherein the inductor Lm is connected in parallel to the primary winding of the transformer of the flyback converter stage 5. That is, the inductors L_lkg and Lm and the primary winding of the transformer of the flyback converter stage 5 shown in Figure 4 correspond to the primary inductor respectively primary winding L1 of the transformer of the flyback converter stage 5 shown in Figure 3**.**

Furthermore, according to Figure 4 the switch S1 is a MOSFET, wherein the output capacitance Coss and the body diode of the MOSFET are indicated. The control signals from the controller for switching the switch S1 are supplied to the gate terminal of the MOSFET. As outlined already above, the switch S1 may also be differently implemented.

Moreover, according to Figure 4, the diode Do and the capacitor Co, which rectify the voltage provided by the secondary winding L2 of the transformer of the flyback converter stage 5, are not part of the flyback converter stage 5.

The shunt resistor Rsns is a current sensing element which is connected to the primary side of the flyback converter stage 5 of the converter circuit 3 in order to sense the current flowing through the boost converter stage 4 and the current flowing through the DC-to-DC converter stage 5, when the switch S1 is in the conducting stage. As the shunt resistor Rsns is arranged on a potential not linked to ground it may be advantageous to sense the voltage over shunt resistor Rsns by the aid of a level shifter or optocoupler. It would be also possible to sense the voltage difference over the shunt resistor Rsns in order to measure the current flowing through the shunt resistor Rsns.
- The load at the output of the converter circuit 3 is indicated in Figure 4 by a resistor Ro.

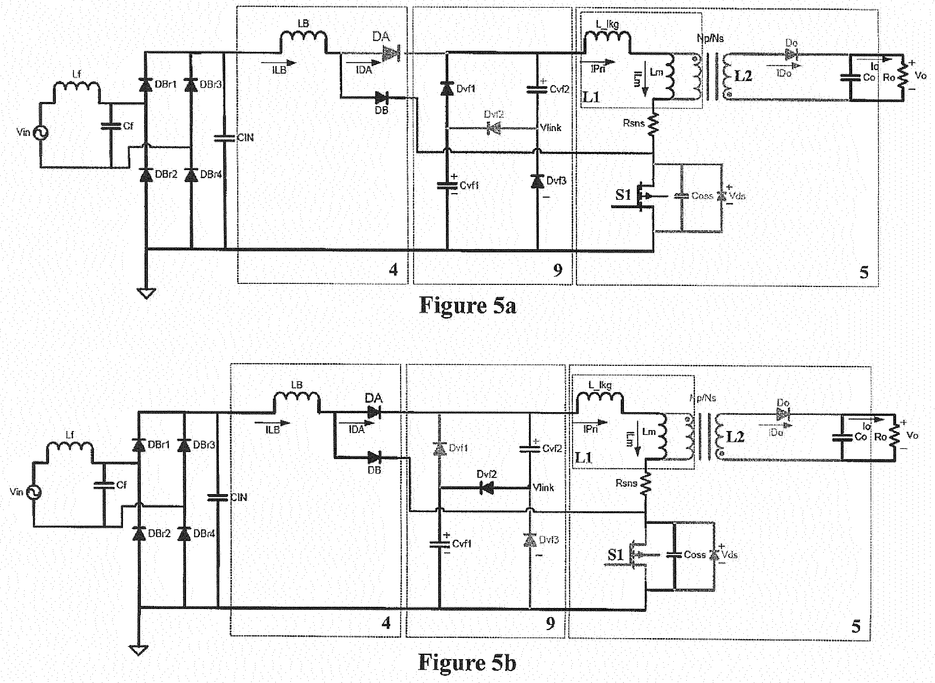

The equivalent circuit shown in Figure 4 is merely for explaining the operation of the converter circuit according to the present invention by way of example, when the switch S1 of the converter circuit 3 is controlled in the discontinuous conduction mode (cf. Figures 5a to 5e below).

**Figures 5a to 5e** show equivalent circuit diagrams of the preferred embodiment of the converter circuit according to Figure 3 for different phases of a preferred embodiment of a discontinuous conduction mode control.

**Figure 5a** shows the equivalent circuit diagram of the preferred embodiment of the converter circuit according to Figure 3 for a first phase of a control cycle of a preferred embodiment of the discontinuous conduction mode. In the first phase the switch S1 is in the conducting state. The diode DA of the boost converter stage 4 is blocked respectively reverse biased and the diode DB of the boost converter stage 4 is conducting. No electrical energy is transferred from the primary side to the secondary side of the flyback converter stage 5 via the transformer. The load Ro is supplied with electrical energy stored in the capacitor Co of the secondary side of the flyback converter stage 5.

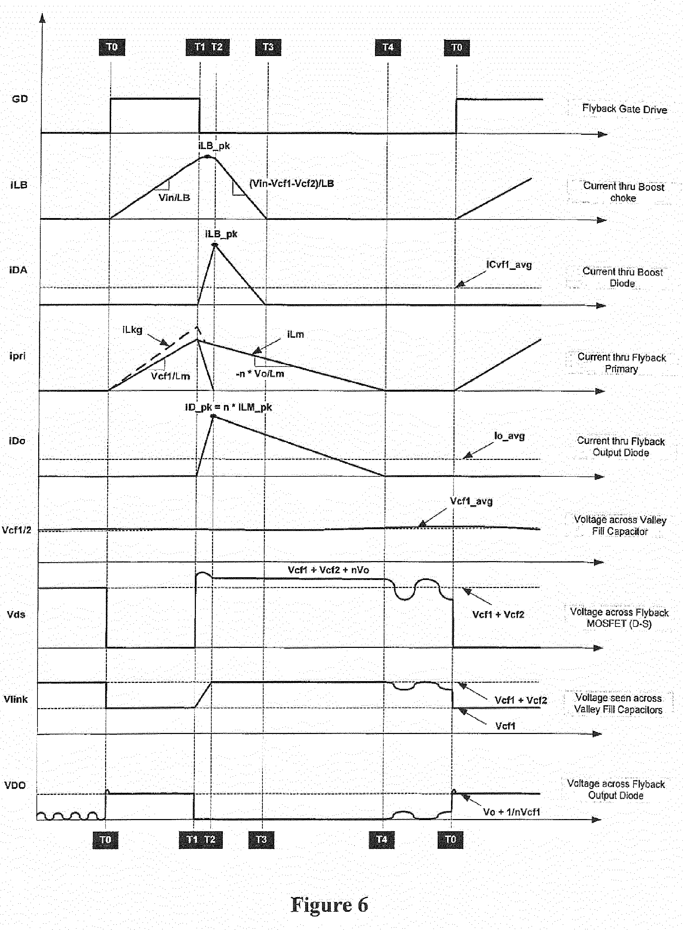

The first phase of a control cycle of the discontinuous conduction mode corresponds to the time period between the time T0 and T1 shown in Figure 6. As a result of the switch S1 being in the conducting state during the first phase the current ILB flowing through the electrical energy storage element LB of the boost converter stage 4 rises and the electrical energy storage element LB is charged (cf. graph *"iLB"* of Figure 6). The electrical energy storage element L1 of the flyback converter stage 5 is also charged with electrical energy stored in the capacitors Cvf1 and Cvf2 of the valley fill circuit 9 and the current IPri flowing through the electrical energy storage element L1 of the flyback converter rises (cf. graph *"ipri"* of Figure 6). Both the current ILB of the electrical energy storage element LB and the current IPri of the electrical energy storage element L1 flow through the switch S1 in the first phase.

**Figure 5b** shows the equivalent circuit diagram of the preferred embodiment of the converter circuit according to Figure 3 for a second phase of a control cycle of a preferred embodiment of the discontinuous conduction mode. In the second phase the switch S1 is switched to the non-conducting state. As soon as the switch S1 is put in the non-conducting state, the diode DA of the boost converter stage 4 starts conducting while the diode DB of the boost converter stage is still conducting. No electrical energy is transferred from the primary side to the secondary side of the flyback converter stage 5 via the transformer.

The load Ro is supplied with electrical energy stored in the capacitor Co of the secondary side of the flyback converter stage 5.

The second phase of a control cycle of the discontinuous conduction mode corresponds to the time period between the time T1 and T2 shown in Figure 6. Both the electrical energy storage element LB of the boost converter stage 4 and the electrical energy storage element L1 of the flyback converter stage 5 start to discharge and, thus, the current ILB of the electrical energy storage element LB and the current IPri of the electrical energy storage element L1 start to fall (cf. graphs *"iLB"* and *"ipri"* of Figure 6).

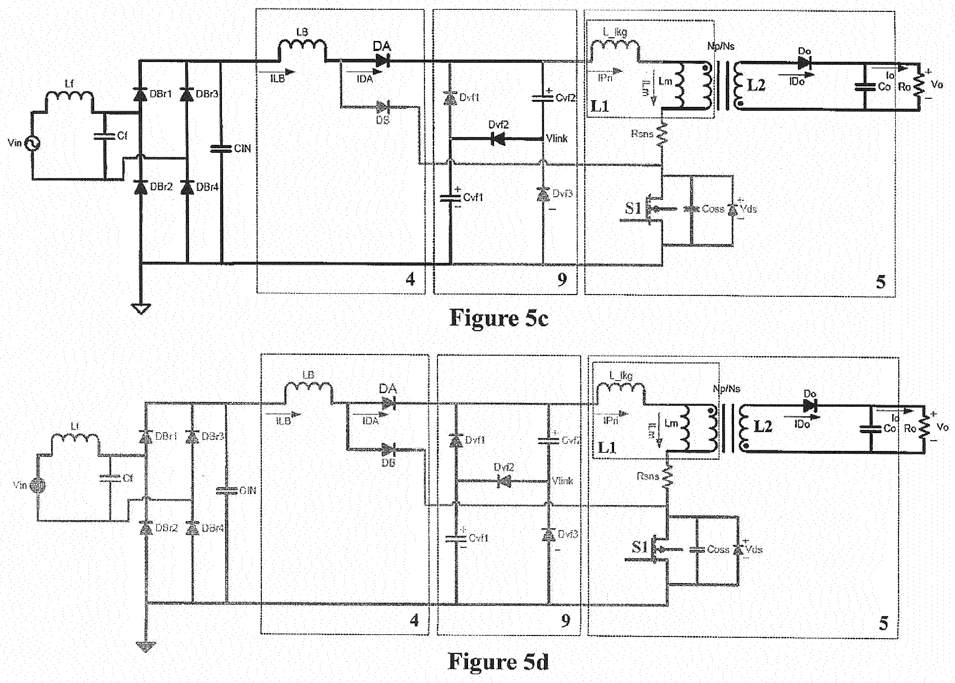

**Figure 5c** shows the equivalent circuit diagram of the preferred embodiment of the converter circuit according to Figure 3 for a third phase of a control cycle of a preferred embodiment of the discontinuous conduction mode. In the third phase the switch S1 is still in the non-conducting state. Electrical energy is transferred from the boost converter stage 4 to the capacitors Cvf1 and Cvf2 of the valley fill circuit 9 and electrical energy is transferred from the primary side to the secondary side of the flyback converter stage 5 via the transformer.

The third phase of a control cycle of the discontinuous conduction mode corresponds to the time period between the time T2 and T3 shown in Figure 6. Both the electrical energy storage element LB of the boost converter stage 4 and the electrical energy storage element L1 are still being discharged and, thus, the current ILB of the electrical energy storage element LB and the current IPri of the electrical energy storage element L1 continue to fall (cf. graphs "*iLB*" and *"ipri"* of Figure 6). In the third phase the leakage electrical energy of the flyback converter circuit has dissipated, i.e. the inductor L_lkg representing in Figures 5a to 5e the leakage energy is completely discharged.

**Figure 5d** shows the equivalent circuit diagram of the preferred embodiment of the converter circuit according to Figure 3 for a fourth phase of a control cycle of a preferred embodiment of the discontinuous conduction mode. In the fourth phase the switch S1 is still in the non-conducting state. The boost converter stage 4 is no longer transferring electrical energy to the capacitors Cvf1 and Cvf2 of the valley fill circuit 9. The flyback converter stage 5 is still transferring electrical energy from its primary side to its secondary side via the transformer.

The fourth phase of a control cycle of the discontinuous conduction mode corresponds to the time period between the time T3 and T4 shown in Figure 6. At the beginning of the fourth phase (at time T3), the electrical energy storage element LB of the boost converter stage 4 is completely discharged. That is, the current ILB of the electrical energy storage element LB has reached zero amperes (cf. graph *"iLB"* of Figure 6). Thus, the boost converter stage 4 reaches at the beginning of the fourth phase the non-conducting phase. The electrical energy storage element LB of the boost converter stage 4 is kept uncharged during the fourth phase. The electrical energy storage element L1 is still being discharged and, thus, the current IPri of the electrical energy storage element L1 continues to fall (cf. graphs *"ipri"* of Figure 6). Therefore, in the fourth phase the boost converter stage 4 assumes the non-conducting phase, while the flyback converter stage 5 is still in the conducting phase (cf. graphs *"iLB"* and *"ipri"* of Figure 6).

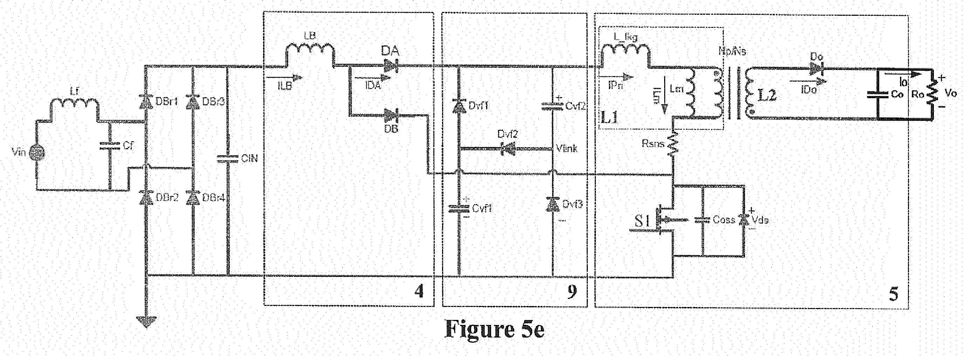

**Figure 5e** shows the equivalent circuit diagram of the preferred embodiment of the converter circuit according to Figure 3 for a fifth phase of a control cycle of a preferred embodiment of the discontinuous conduction mode. In the fifth phase the switch S1 is still in the non-conducting state. The boost converter stage 4 is still not transferring electrical energy to the capacitors Cvf1 and Cvf2 of the valley fill circuit 9 and the flyback converter stage 5 is not transferring anymore electrical energy from its primary side to its secondary side via the transformer. In the fifth phase the conductor Co on the secondary side of the flyback converter stage 5 supplies the load Ro with electrical energy.

The fifth phase of a control cycle of the discontinuous conduction mode corresponds to the time period between the time T4 and T0 shown in Figure 6. The boost converter stage 4 is kept in the non-conducting stage during the fifth phase. Thus, the electrical energy storage element LB of the boost converter stage 4 is kept uncharged during the fifth phase. At the beginning of the fifth phase (at time T4), the electrical energy storage element L1 of the flyback converter stage 5 is completely discharged. That is, the current Ipri of the electrical energy storage element L1 has reached zero amperes (cf. graph *"ipri"* of Figure 6). Thus, the flyback converter stage 5 reaches at the beginning of the fifth phase the non-conducting phase. (cf. graph *"ipri"* of Figure 6). Therefore, in the fifth phase the flyback converter stage 5 reaches the non-conducting phase after the boost converter stage 4 has already reached the non-conducting phase in the fourth phase (cf. graphs *"iLB"* and *"ipri"* of Figure 6).

**Figure 6** shows electrical parameters of the preferred embodiment of the converter circuit according to Figure 3 for the different phases of the preferred embodiment of a discontinuous conduction mode control shown in Figures 5a to 5e.

As outlined already above, the first phase of a control cycle of the discontinuous conduction mode (shown in Figure 5a) corresponds to the time period between the time T0 and T1 of Figure 6; the second phase of the control cycle (shown in Figure 5b) corresponds to the time period between the time T1 and T2 of Figure 6; the third phase of the control cycle (shown in Figure 5c) corresponds to the time period between the time T2 and T3 of Figure 6; the fourth phase of the control cycle (shown in Figure 5d) corresponds to the time period between the time T3 and T4 of Figure 6 and the fifth phase of the control cycle (shown in Figure 5e) corresponds to the time period between the time T4 and T0 of Figure 6.

The graph "*GD*" of Figure 6 shows the control signal applied to the gate-terminal of the switch S1 for controlling the switching of the switch S1 over time. During a high signal the switch S1 is in the conducting state and during a low signal the switch S1 is in the non-conducting state.

The graph *"iLB"* of Figure 6 shows the current flow over time of the current ILB flowing through the electrical energy storage element LB of the boost converter stage 4.

The graph "*iDA*" of Figure 6 shows the current flow over time of the current IDA flowing through the diode DA of the boost converter stage 4**.**

The graph *"ipri"* of Figure 6 shows the current flow over time of the current IPri flowing through the electrical energy storage element L1 of the flyback converter stage 5. In the graph *"ipri"* the current flow over time of the current iLkg flowing through the inductor L_lkg and of the current iLm flowing through the inductor Lm are also indicated. The inductors L_lkg and Lm are part of the electrical energy storage element L1 of the flyback converter stage 5 in the equivalent circuit diagram of Figures 5a to 5e.

The graph "*iDo*" of Figure 6 shows the current flow over time of the current IDo flowing through the diode Do on the secondary side of the flyback converter stage 5.

The graph "*Vc1*/*2*" of Figure 6 shows the average voltage Vcf1_avg of the capacitor Cvf1 of the valley fill circuit 9 over time.

The graph "*Vds*" of Figure 6 shows the drain-source-voltage Vds across the MOSFET forming the switch S1 of the flyback converter stage 5 over time.

The graph "*Vlink*" of Figure 6 shows the voltage seen across the capacitors Cvf1 and Cvf2 of the valley fill circuit 9 over time.

The graph "*VDO*" of Figure 6 shows the voltage across the diode Do on the secondary side of the flyback converter stage 5 over time.

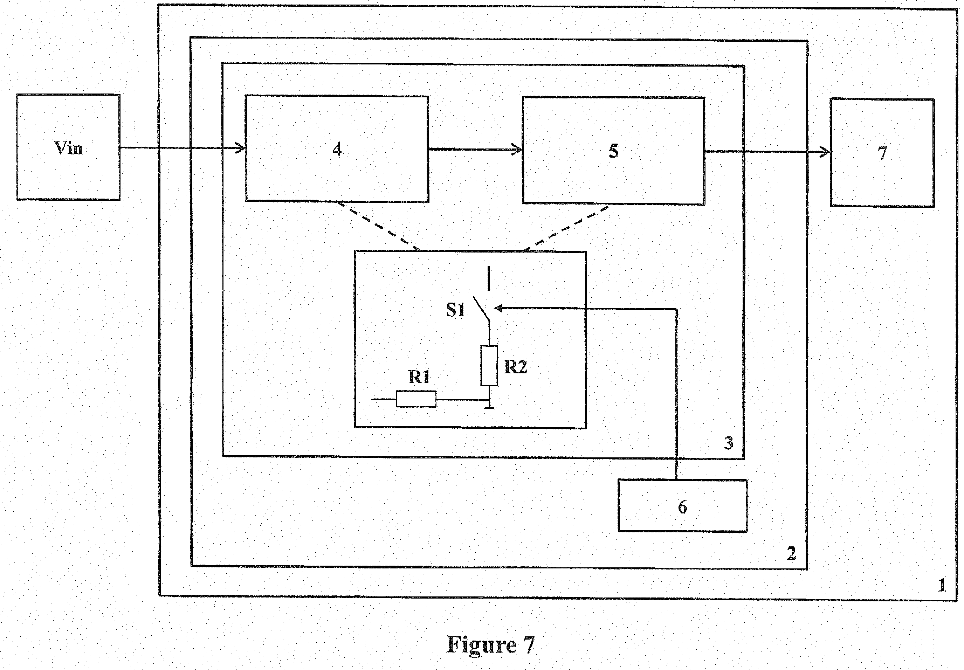

**Figure 7** shows the conceptual block diagram of Figure 1, schematically indicating a preferred embodiment of sensing current according to the present invention. The above description of Figure 1 is also valid for Figure 7.

According to Figure 7 the converter circuit 3 further comprises two shunt resistors R1, R2 as current sensing elements which are connected to the switch S1 of the converter circuit 3 in order to sense the current flowing through the boost converter stage 4 and the current flowing through the DC-to-DC converter stage 5, when the switch S1 is in the conducting stage.

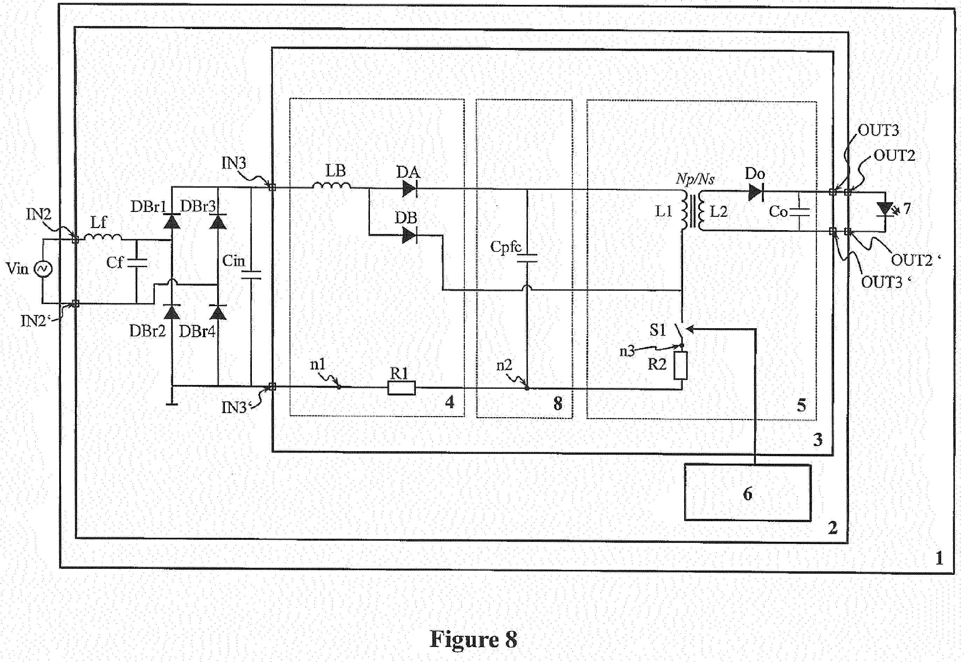

**Figure 8** shows the circuit diagram of the preferred embodiment of the converter circuit according to the present invention shown in Figure 2 with a preferred embodiment of sensing current according to the present invention.

The above description of Figure 2 is also valid for Figure 8.

Although the preferred embodiment of sensing current is shown in Figure 8 with respect to a converter circuit 3 comprising an electrical energy storage element 8 for coupling the boost converter stage and a flyback-converter stage for the DC-to-DC converter stage, the current sensing according to the present invention may be also implemented with a converter circuit 3 having a passive power factor correction circuit 9, such as a valley fill circuit, for coupling the boost converter stage 4 and the DC-to-DC converter stage 5 and/or having a different type of DC-to-DC converter stage 5 compared to the flyback converter stage of Figure 8.

According to Figure 8, the converter circuit 3 also comprises two current sensing elements in the form of two shunt resistors R1 and R2 for sensing the current flowing through the boost converter stage 4 and the current flowing through the flyback converter stage 5. In particular, the two shunt resistors R1 and R2 are configured to sense together the current flowing through the inductor LB of the boost converter stage 4 and the current flowing through the primary winding L1 of the transformer of the flyback converter stage 5.

The shunt resistor R1 is connected between a first node n1 and a second node n2 of the converter circuit 3**.** The first node n1 corresponds to the low potential input terminal IN3' of the converter circuit 3**.** The shunt resistor R2 is connected to the first terminal of the switch Si and the second node n2 of the converter circuit 3**.** The node between the first terminal of the switch S1 and the shunt resistor R2 is referred to as the third node n3. The capacitor Cpfc forming the electrical energy storage element 8 is also connected on one side to the second node n2.

When the switch S1 is in the conducting state, the current of the boost converter stage 4 and the current of the flyback converter stage 5 flow through the conducting switch S1 and, thus, are sensed by the resistor R2. The current of the boost converter stage 4, in particular of the inductor LB, flows via the diode DB and the switch S1 to the shunt resistor R2, while the diode DA is reverse biased, when the switch S1 is in the conducting state. All the current that flows through the primary winding L1 of the transformer of the flyback converter stage 5 is sourced from the capacitor Cpfc and flows via the switch S1 to the shunt resistor R2, when the switch S1 is conducting. Thus, both the current of the boost converter stage 4 and the current of the flyback converter stage 5 flow through the shunt resistor R2, when the switch S1 is in the conducting state.

However, only the current of the boost converter stage 4 also flows through the shunt resistor R1.

Therefore, the sensing result of the shunt resistor R2 is the sum of the current of the boost converter stage 4 and the current of the flyback converter stage 5 and the sensing result of the shunt resistor R1 is only the current of the boost converter stage 4.

Thus, by subtracting the sensing result of the shunt resistor R1 from the sensing result of the shunt resistor R2 the current of the flyback converter stage 5 is obtained.

Therefore, preferably, the sensing results of the shunt resistor R1 and the shunt resistor R2 are feed to the controller 6 (not shown in Figure 8). The controller 6 may then determine on the basis of these sensing results the current of the flyback converter stage 5 and, thus, may control the switch S1 on the basis of the current of the flyback converter stage 5.

Preferably, the shunt resistors R1 and R2 have the same resistance value.

The shunt resistors R1 and R2 of the embodiment of Figure 8 offer the advantage of measurements on shunt resistors linked to ground where no level shifter or opto-coupler is necessary to sense the signals at the measurement points. Such arrangement would provide less complicated measurement in comparison to the embodiment of Figure 4 where the shunt resistor Rsns is arranged on a position not directly inked to ground.

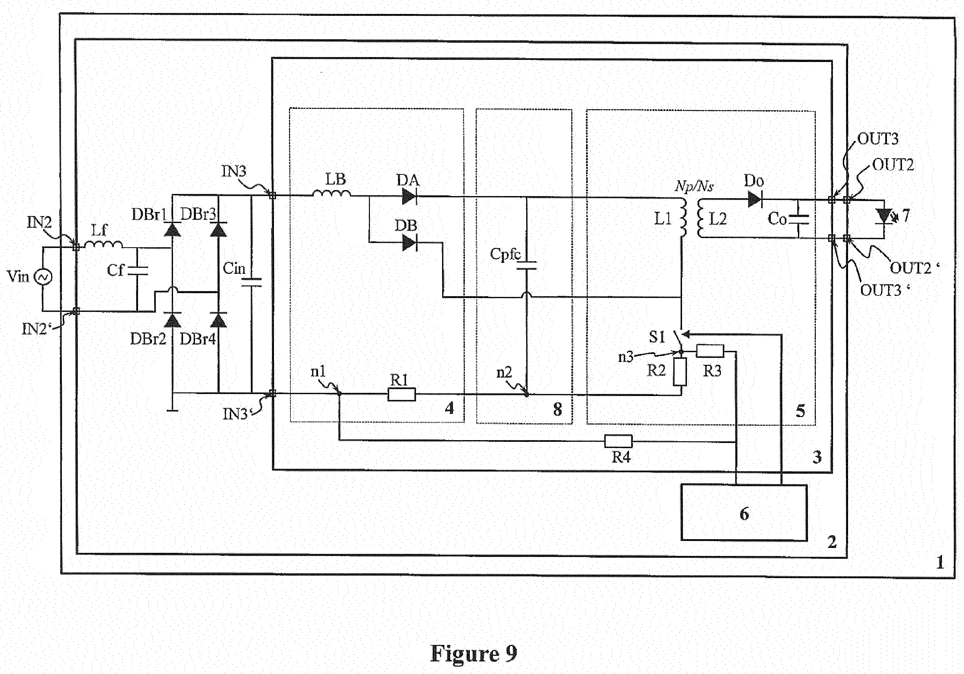

**Figure 9** shows the equivalent circuit diagram of the preferred embodiment of the converter circuit according to the present invention shown in Figure 2 with a preferred embodiment of sensing current according to the present invention.

The preferred embodiment of sensing current according to Figure 9 basically corresponds to the preferred embodiment of sensing current according to Figure 8 and, thus, the above description of the preferred embodiment of Figure 8 is also valid for the preferred embodiment of Figure 9. The above description of Figure 2 is also valid for Figure 9.

The embodiment according to Figure 9 differs from the embodiment according to Figure 8 in that the converter circuit 3 according to Figure 9 comprises two additional current sensing elements in the form of two addition shunt resistors R3 and R4. The two additional shunt resistors R3 and R4 are provided in the converter circuit 3 for feeding the sensing results of the shunt resistors R1 and R2 to the controller 6 of the operating device 2**.**

According to Figure 9, the shunt resistor R4 is connected on one side to the first node n1 of the converter circuit 3 and the shunt resistor R3 is connected on one side to the third node n3 between the switch S1 and the shunt resistor R2 of the converter circuit 3**.** The other side of the shunt resistor R4 and the other side of the shunt resistor R3 are connected to each other and to the controller 6.

By connecting the shunt resistors R3 and R4 to each other the sensing result of the shunt resistor R1 is subtracted from the sensing result of the shunt resistor R2. Therefore, only the value of the current of the flyback converter stage 5 is fed to the controller 6.

## Claims

1. Converter circuit (3) for converting an input voltage (Vin) into an output voltage, wherein the converter circuit (3) comprises
- an actively switched boost converter stage (4),
- an actively switched DC-to-DC converter stage (5), and
- a switch (S1) configured to be switched by a controller (6);
- wherein the operation of both the actively switched boost converter stage (4) and the actively switched DC-to-DC converter stage (5) is controllable by switching the same switch (S1) of the converter circuit (3),
**characterized in that**
the input of the DC-to-DC converter stage (5) is electrically connected in series to the output of the boost converter stage (4).

2. Converter circuit (3) according to claim 1,
- wherein the boost converter stage (4) comprises the switch (S1); and
- wherein the operation of both the boost converter stage (4) and the DC-to-DC converter stage (5) is controllable by switching the switch (S1) of the boost converter stage (4).

3. Converter circuit (4) according to claim 1,
- wherein the DC-to-DC converter stage (5) comprises the switch (S1); and
- wherein the operation of both the boost converter stage (4) and the DC-to-DC converter stage (5) is controllable by switching the switch (S1) of the DC-to-DC converter stage (5).

4. Converter circuit (3) according to any of the preceding claims,
- wherein the boost converter stage (4) comprises a first electrical energy storage element (LB) and the DC-to-DC converter stage (5) comprises a second electrical energy storage element (Li); and
- wherein the charging and discharging of the first and second electrical energy storage element (LB, Li) is controllable by switching the switch (S1) of the converter circuit (3).

5. Converter circuit (3) according to any of the preceding claims,
- wherein the DC-to-DC converter stage (5) is a flyback converter stage or a buck converter stage.

6. Converter circuit (3) according to any of the preceding claims,
- wherein the boost converter stage (4) and the DC-to-DC-converter stage (5) are electrically connected to each other via a third electrical energy storage element (8).

7. Converter circuit (3) according to any of the claims 1 to 5,
- wherein the boost converter stage (4) and the DC-to-DC-converter stage (5) are electrically connected to each other via a passive power factor correction circuit (9), preferably via a valley fill circuit.

8. Converter circuit (3) according to any of the preceding claims,
- wherein the switching of the switch (S1) is controllable such that both the boost converter stage (4) and the DC-to-DC converter stage (5) are respectively operated in the discontinuous conduction mode.

9. Converter circuit (3) according to any of the preceding claims,
- wherein the boost converter stage (4) and the DC-to-DC converter stage (5) are configured to operate in the discontinuous conduction mode such that the boost converter stage (4) assumes the non-conducting phase, while the DC-to-DC converter stage (5) is still in the conducting phase.

10. Converter circuit according to any of the preceding claims, with
- a first current sensing element (R1), and
- a second current sensing element (R2);
- wherein the first current sensing element (R1) and the second current sensing element (R2) are configured to sense the current of the boost converter stage (4), in particular of the first electrical energy storage element (LB), and the current of the DC-to-DC converter stage (5), in particular of the second electrical energy storage element (Li), with respect to the low potential of the converter circuit (3), preferably with respect to ground potential, when the switch (S1) is in the conducting state.

11. Operating device (2) for operating lighting means (7), wherein the operating device (2) comprises
- input terminals (IN2, IN2') for supplying an input voltage (Vin) to the operating device (2),
- output terminals (OUT2, OUT2') for electrically connecting the lighting means (7) to the operating device (2), and
- a converter circuit (3) according to any of the preceding claims;
- wherein the converter circuit (3) is configured to convert the input voltage (Vin) supplied to the operating device (2) to an operating voltage for operating the lighting means (7) and to supply the operating voltage to the output terminals (OUT2, OUT2') of the operating device (2).

12. Lighting device (1) comprising
- an operating device (2) according to claim 11 , and
- lighting means (7) electrically connected to the output terminals (OUT2, OUT2') of the operating device (2);
- wherein the operating device (2) is configured to supply the lighting means (7) with electrical energy.

13. Method for controlling a converter circuit (3) according to any of the claims 1 to 10
**characterized in that**
- the operation of both the actively switched boost converter stage (4) and the actively switched DC-to-DC converter stage (5) is controlled by switching the switch (S1) of the converter circuit (3).

14. Method according to claim 13, wherein the boost converter stage (4) comprises a first electrical energy storage element (LB) and the DC-to-DC converter stage (5) comprises a second electrical energy storage element (Li);
- wherein the charging and discharging of the first and second electrical energy storage element (LB, Li) is controlled by switching the switch (S1).

15. Method according to claim 13 or 14,
- wherein the switching of the switch (S1) is controlled such that both the boost converter stage (4) and the DC-to-DC converter stage (5) are respectively operated in the discontinuous conduction mode.

16. Method according to any of the claims 13 to 15,
- wherein the boost converter stage (4) and the DC-to-DC converter stage (5) are operated in the discontinuous conduction mode such that the boost converter stage (4) assumes the non-conducting phase, while the DC-to-DC converter stage (5) is still in the conducting phase.
